# EUROPEAN PATENT APPLICATION

(11) **EP 2 735 746 A1**
(43) Date of publication of application: **28.05.2014**
(21) Application number: 12194078.7
(22) Date of filing: 23.11.2012
(51) Int. Cl.: F16B 25/00

(54) **Screw, assembly, and method of screwing a screw in an object**

(71) Applicant: Peak Innovation Limited, Hong Kong (HK)
(72) Inventor: Pennoit, Luc, B-9050 Gentbrugge (BE)
(74) Representative: Duyver, Jurgen Martha Herman

(57) **Abstract**

Screw (2) comprising a head (4) and an elongated body (6) having an end portion (8), said body (6) having a body surface (10), wherein the screw (2) is provided with a thread (12) that extends along a helical thread path along at least part of the body surface (10), said thread (12) having a plurality of windings (14), the thread (12) defining, in between subsequent windings (14), a channel (16) that extends along a helical channel path (18) and has a width (W) in a direction transverse to said helical channel path (18), wherein the screw (2) is further provided, along the body surface (10), with a toothed structure (20) that is positioned in the channel (16).

## Description

### Field

The invention relates to a screw arranged to be screwed in an object, the screw comprising a head and an elongated body having an end portion that is provided with the head, said body having a body surface, wherein the screw is provided with a thread that extends along a helical thread path along at least part of the body surface, said thread having a plurality of windings, the thread defining, in between subsequent windings, a channel that extends along a helical channel path and has a width in a direction transverse to said helical channel path. The invention also relates to an assembly of a screw and an object. The invention also relates to a method of screwing a screw in an object, the method comprising providing a screw that comprises a head and an elongated body having an end portion that is provided with the head, said body having a body surface, wherein the screw is provided with a thread that extends along a helical thread path along at least part of the body surface, said thread having a plurality of windings, the thread defining, in between subsequent windings, a channel that extends along a helical channel path and has a width in a direction transverse to said helical channel path.

### Background

A screw of the type mentioned above is well known. It has since long been provided in various embodiments and has extensively shown its use. However, although useful, when using such a known screw, there is a risk of damaging the object. In particular, due to the presence of the screw, the object may be split in a vicinity of the screw.

Publication EP 2 077 396 A1 describes a screw of the type mentioned above provided with a double thread, each thread having the same pitch. One of the threads is conventional, while the other thread has concavities. The threads are mutually spaced apart. According to EP 2 077 396 A1, the concavities prevent cuttings to be facilely twisted around the body, so that a screwing resistance as well as a chance of bursting of the object can be reduced. Debris may be accumulated in the space that is present in between both threads of the screw of EP 2 077 396 A1.

Although the screw of EP 2 077 396 A1 may be useful in some materials which produce cuttings that tend to twist around the body of the screw, the thread having concavities may be less useful - or even not useful at all - in other materials lacking such tendency to twist. For example, in a number of relatively brittle and/or layered materials, e.g. various types of stones or various types of wood, such tendency may be lacking, while a risk for splitting exists due to the brittleness and/or layered structure of the material.

### Summary of the invention

It is an aim of the invention to provide a screw arranged to be screwed in an object that may reduce a risk for splitting of the object.

Thereto, there is provided a screw arranged to be screwed in an object, the screw comprising a head and an elongated body having an end portion that is provided with the head, said body having a body surface, wherein the screw is provided with a thread that extends along a helical thread path along at least part of the body surface, said thread having a plurality of windings, the thread defining, in between subsequent windings, a channel that extends along a helical channel path and has a width in a direction transverse to said helical channel path, wherein the screw is further provided, along the body surface, with a toothed structure that is positioned in the channel for, during screwing in use of the screw, scraping over substantially the whole channel width against at least part of a portion of said object that in use faces said channel when the screw is screwed in the object. Preferably, the toothed structure extends at least over substantially the whole channel width.

Thus, in use, material of the object may be scraped away over substantially the whole width of the channel. As a result, a width of a hole in the object wherein the screw is screwed, may be increased. In particular, a width effectively experienced by a part of the thread may be increased. Said part of the thread may be located in between said toothed structure and the head, or may be located in between a part of said toothed structure and the head. Because of the increase of the width of the hole, a risk of splitting of the object may be reduced. A path of the thread along the object may cross or may substantially abut a path of the toothed structure along said object. Such is different from EP 2 077 396 A1, where both threads of the screw of EP 2 077 396 A1 are spaced apart.

In an embodiment, the toothed structure projects out of the body surface over a toothed structure height measured in a direction transverse to the body surface, and the thread projects out of the body surface over a thread height measured in a direction transverse to the body surface, wherein the toothed structure height is smaller than the thread height. Preferably, the toothed structure height and the thread height are measured at corresponding locations along the body of the screw, more preferably at locations lying substantially at the same location along longitudinal direction of the body. Preferably, a maximum value of the toothed structure height is smaller than the thread height, in particular smaller than a minimum value of the thread height. Preferably, along at least part of the screw, a maximum value of the toothed structure height is smaller than the thread height, preferably at least 1.5 times, at least 2 times, or at least 3 times smaller than the thread height. Such values of the toothed structure height relative to the thread height may promote efficient working of the screw. A ratio of the thread height and a maximum value of the toothed structure height, is preferably in a range from 1.2 to 10, more preferably in a range from 1.5 to 5, in particular in a range from 2 to 3. If the toothed structure height is too small, the toothed structure may be ineffective. If the toothed structure height is too large, the toothed structure may possibly even promote splitting of the object.

The plurality of windings may comprise at least a first winding and a second winding. In an embodiment, the toothed structure extends at least from the first winding to the second winding. In a variation, the first winding is subsequent to the second winding. The thread may from a start position to an end position. In a variation, the first winding is positioned near the start position and the second winding is positioned near the end position.

According to preferred embodiments, the toothed structure is formed as a toothed ridge as such toothed ridge has been found to further improve the scraping action is improved.

In an embodiment, the toothed ridge is provided with at least one ridge aperture, preferably with a plurality of ridge apertures.

In an embodiment, the thread is provided with at least one thread aperture, preferably with a plurality of thread apertures. The elongated body may extend in a longitudinal direction. Optionally, the thread apertures are aligned along said longitudinal direction. Such ridge apertures and/or thread apertures may optionally enable removing of scrapings that are produced by the toothed structure when scraping against the object.

In an embodiment, the ridge crosses the first winding and/or the second winding.

Preferably, the toothed ridge extends along a helical ridge path along at least part of the body surface. More preferably, the toothed ridge extends to substantially the end position, or even the end position, of the thread. The toothed ridge can for example extend, preferably tangentially extend, from a first winding of the thread. According to preferred embodiments of the screw according to the current invention, the toothed ridge tangentially extends from the first winding to the end position, more preferably without crossing a further second winding of the thread. It has been found that with such a toothed ridge extending tangentially from the first winding to the end position further improves the scraping action due the change in orientation of the thread in the form of the toothed ridge while maintaining sufficient threading action into the object due to the presence of the thread in addition to the toothed ridge. In addition, the presence of the teeth in the toothed ridge further increase the scraping action. Moreover, the teeth allow the material that has been scraped off due to the scraping action to be stored at least partially in the teeth leaving more room for the screw to pass. Additionally, when not crossing a second winding it has been found that the scraping action by the toothed section can be limited to a limited length of the screw along the longitudinally axis of the screw, further limiting the risk that torque needed for screwing the screw into an object becomes too large.

In an embodiment, the thread has a thread pitch defined by the helical thread path and the ridge has a ridge pitch defined by the helical ridge path, wherein the ridge pitch is different from the thread pitch. Preferably, the ridge pitch may be larger than the thread pitch, preferably is at least two times larger than the thread pitch, more preferably is at least three times larger than the thread pitch. Preferably, the ridge pitch is at most fifteen times larger than the thread pitch, preferably is at most ten times larger than the thread pitch, more preferably is at most five times larger that the thread pitch. Optionally, the ridge pitch is smaller than the thread pitch.

In an embodiment, the elongated body extends in a longitudinal direction, wherein the helical thread path, when seen along said longitudinal direction, rotates in a first direction, and wherein the further helical ridge path, when seen along said longitudinal direction, rotates in a second direction that is similar to the first direction.

In an embodiment, the elongated body extends in a longitudinal direction, wherein the helical thread path, when seen along said longitudinal direction, rotates in a first direction, and wherein the further helical ridge path, when seen along said longitudinal direction, rotates in a second direction that is opposite to the first direction.

In an embodiment, the plurality of windings comprise at least a first winding and a second winding, wherein the toothed structure is formed as a plurality of toothed elements that are mutually spaced apart at least between the first winding and the second winding.

Preferably, the head has a first main surface that is provided with an engagement structure for engaging thereon by means of a screwing tool, wherein the head has a second main surface that is positioned opposite to, and optionally inclined to, the first main surface and is positioned next to the body surface, wherein the second main surface is provided with a plurality of nibs.

Preferably, the screw is arranged to be screwed in an object substantially made of wood.

There is also provided an assembly of a screw according to the invention and the object.

There is further provided a method of screwing a screw in an object, the method comprising providing a screw that comprises a head and an elongated body having an end portion that is provided with the head, said body having a body surface, wherein the screw is provided with a thread that extends along a helical thread path along at least part of the body surface, said thread having a plurality of windings, the thread defining, in between subsequent windings, a channel that extends along a helical channel path and has a width in a direction transverse to said helical channel path, wherein the screw is further provided, along the body surface, with a toothed structure that is positioned in the channel, wherein the method comprises, during screwing, scraping, by means of the toothed structure, over substantially the whole channel width against at least part of a portion of said object that faces said channel when the screw is screwed in the object.

Optionally, the method further comprises removing scrapings out of the channel that have formed as a result of said scraping.

Optionally, said removing comprises screwing the screw at least partly out of the object. Preferably, the method is carried out by means of a screw according to the invention.

### Brief description of the drawings

The invention will be further illustrate by means of non-limiting embodiments with reference to the accompanying drawings, wherein:
Figure 1 shows a screw 2 in an embodiment according to the invention;
Figure 1A schematically shows, in an embodiment, a longitudinal cross section of a part of a screw;
Figure 1B schematically shows, in an embodiment, a side view of a toothed structure;
Figure 2 schematically shows a body surface of a screw in a variation of the embodiment illustrated with respect to figure 1;
Figure 3A schematically shows an embodiment of a screw according to the invention, wherein a toothed structure is formed as a toothed ridge that extends from a first winding to a second winding;
Figure 3B schematically shows an embodiment of a screw according to the invention, wherein a toothed structure is formed as a plurality of toothed elements that are mutually spaced apart between a first winding and a second winding;
Figure 4 schematically shows an embodiment of a screw 2 according to the invention; and
Figure 5 schematically shows a portion of a screw 2 near a head of the screw.
Figure 6 schematically shows a detailed view of a preferred embodiment of a portion of a screw 2 according to the invention.

### Detailed description

The present invention will be illustrated with respect to particular embodiments and with reference to certain drawings but the invention is not limited thereto. The drawings described are only schematic and are non-limiting. In the drawings, the size of some of the elements may be exaggerated and not drawn on scale for illustrative purposes. The dimensions and the relative dimensions do not necessarily correspond to actual reductions to practice of the invention.

Furthermore, the terms first, second, third and the like in the description and in the claims, may be used for distinguishing between similar elements and not necessarily for describing a sequential or chronological order. The terms may be interchangeable under appropriate circumstances and the embodiments of the invention can operate in other sequences than described or illustrated herein.

Moreover, terms like top, bottom, over, under may be used for descriptive purposes and not necessarily for describing relative positions. The terms so used may be interchangeable under appropriate circumstances and the embodiments of the invention described herein can operate in other orientations than described or illustrated herein.

The term "comprising" should not be interpreted as being restricted to the means listed thereafter; it does not exclude other elements or steps. It may be interpreted as specifying the presence of the stated features, integers, steps or components as referred to, but does not preclude the presence or addition of one or more other features, integers, steps or components, or groups thereof. Thus, the scope of the expression "a device comprising means A and B" should not be limited to devices consisting only of components A and B.

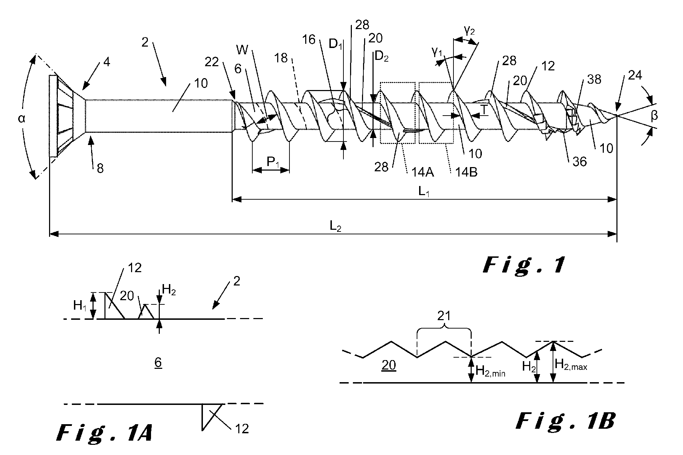

Figure 1 shows a screw 2 in an embodiment according to the invention. The screw 2 is arranged to be screwed in an object. The object may be substantially made of wood, of rock, of glass, and/or of another material. The object may be e.g. be formed by at least a portion of a building structure, such as a wall or a beam. Thus, there is also provided an assembly of a screw 2 and an object. The screw 2 comprises a head 4 and an elongated body 6 having an end 8 that is provided with the head 4. The body 6 further has a body surface 10.

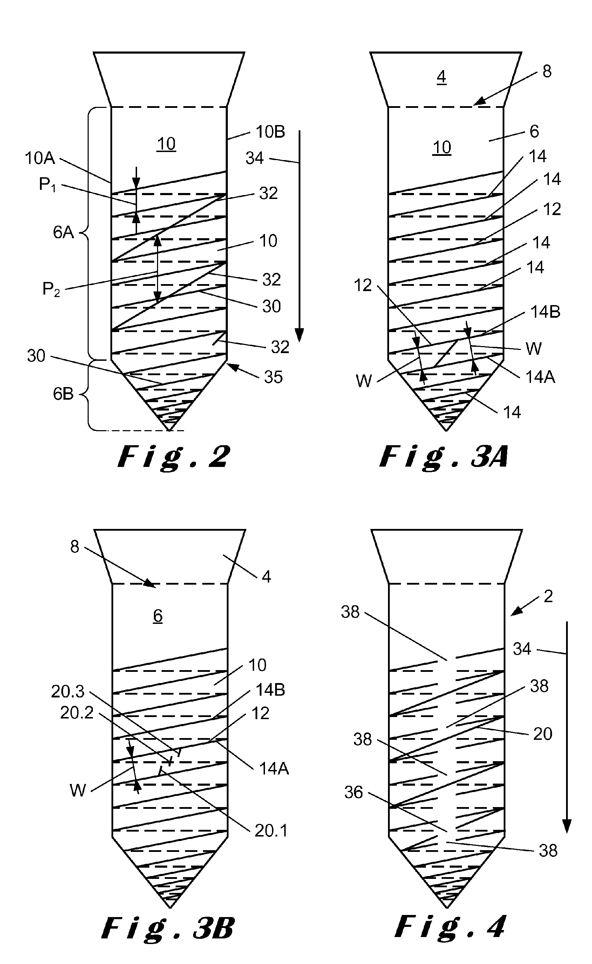

The screw 2 is provided with a thread 12 that extends along a helical thread path along at least part of the body surface 10. The helical thread path is not shown in figure 1, as is it is covered by the thread, but is visible in figure 2 with reference number 30. The thread has a plurality of windings 14. The thread defines, in between subsequent windings 14A, 14B, a channel 16. The channel 16 extends along a helical channel path, part of which is indicated in figure 1 by means of dashed line 18. The channel 16 has a width W in a direction transverse to the helical channel path 18.

The screw 16 is further provided, along the body surface 10, with a toothed structure 20 that is positioned in the channel 16. The toothed structure 20 is positioned for, during screwing in use of the screw 2, scraping over substantially the whole channel width W against at least part of a portion of the object. The portion of the object in use faces the channel 16 when the screw 2 is screwed in the object.

The toothed structure 20 may extend over at least substantially the whole channel width W. Such may enable an effective widening of a size of a hole wherein the screw in use is screwed. Thus, relatively few, or even no, parts of an inner surface of said hole along which the toothed structure has passed, may remain unscraped, as a result of the toothed structure 20 extending over at least substantially the whole channel width W. In the embodiment illustrated in figure 1, the toothed structure 20 extends over a plurality of channel widths W. The toothed structure may be formed as a toothed ridge, as is indicated in figure 1. Alternatively, the toothed structure may be formed as a plurality of toothed elements 20.i (i=1, ..., 3) that are mutually spaced apart. Such a toothed structure will be further illustrated with reference to figure 3B.

The plurality of windings comprises at least a first winding 14A and a second winding 14B. The first winding 14A may be subsequent to the second winding 14B, as indicated in the example of figure 1. The toothed structure may extend at least from the first winding to the second winding. Then, the toothed structure at least extends over the channel width W. However, alternatively, a winding near a start position 22 of the thread may be considered as a first winding and a winding near an end position 24 of the thread may be regarded as a second winding. Thus, the first winding may positioned near the start position 22 and the second winding may be positioned near the end position 24, the thread 12 extending from the start position 22 to the end position 24. Then, the toothed structure, extending at least from the first winding to the second winding, may extend over at least a plurality of channel widths W, and thus for example over a substantial part of the length of the body surface 10.

In figure 1 it is illustrated that the toothed structure may cross the thread 12, e.g. may cross the first winding and the second winding, in crossing regions 28. Figure 1 shows a plurality of such crossing regions 28. However, the toothed structure crossing the thread 12 is not necessary. Also when a relatively small space between the toothed structure and the first and/or second winding exists, the toothed structure 20 may be considered to be positioned for, during screwing in use of the screw 2, scraping over substantially the whole channel width W against the at least part of a portion of the object. Said a relatively small space may, more in general, e.g. be at most 0.2 times the channel width W, preferably at most 0.1 times the channel width W, more preferably at most 0.05 times the channel width W.

The toothed ridge, as e.g. shown in figure 1, may extend a helical ridge path along at least part of the body surface 10. The helical ridge path is not shown in figure 1, as it is covered by the toothed ridge, but is visible in figure 2 with reference number 32. The thread 12 may have a thread pitch P1. The thread pitch P1 may be defined by the helical thread path. The toothed ridge 12 may have a ridge pitch P2 (see e.g. figure 2) defined by the helical ridge path. The ridge pitch P2 may be different from the thread pitch P1.

Figure 1A schematically shows, in an embodiment, a longitudinal cross-section of a part of the screw 2. Said cross-section has a cross-sectional plane that is parallel to a longitudinal direction of the screw 2. Figure 1B schematically shows, in an embodiment, a side view of a toothed structure 20. For clarity, the schematic of figure 1B shows the toothed structure 20 along a straight line. However, the toothed structure 20 may be curved along a helical path, as e.g. shown in figure 1. The toothed structure 20 may project out of the body surface 10 over a toothed structure height H2 measured in a direction transverse to the body surface 10. Maximum and minimum values of the toothed structure height H2 are indicated in figure 1B with H2, max and H2,min respectively. The thread 12 may project out of the body surface 10 over a thread height H1 measured in a direction transverse to the body surface 10. The toothed structure height H2 may be smaller than the thread height H1. Preferably, a maximum value of the toothed structure height H2 is smaller than the thread height H1. Preferably, along at least part of the screw 2, a maximum value of the toothed structure height H2 is smaller than the thread height H1, preferably at least 1.5 times, at least 2 times, or at least 3 times smaller than the thread height H1. A ratio of the tread height H1 and a maximum value of the toothed structure height H2, is preferably in a range from 1.2 to 10, more preferably in a range from 1.5 to 5, in particular in a range from 2 to 3.

A tooth of the toothed structure is indicated in figure 1B with reference number 21. Various shapes of teeth are possible, for example teeth separated by ridge apertures. However, a ridge having an approximately constant height H2 and being provided with an abrasive surface, may also be regarded as a toothed structure.

By way of an example the length L2 of the screw 2 may be for example 10mm - 1000mm, usually between 10mm and 600mm. The length L1 of the threaded portion of the screw 2 may be about the same as the length of the screw 2, but can also be about 60% of the length L2, depending on the desired use of the screw.

By further example, the angle alpha (α) may for example be about 90° or for example about 60°, the angle beta (β) may be for example between about 22° - 34°, usually 26° and the angle gamma1 (γ1) for example is about 15° while the angle gamma2 (γ2) is for example about 30°. The diameter D2 of the body surface 10 for example is between about 1.5mm and 18mm whereas the diameter D1 including a winding for example is between about 2.5mm and 20mm. It is understood that these values are mere examples and of course other values are possible depending on for example the desired application.

Figure 2 schematically shows a body surface 10 of a screw 2 in a variation of the embodiment illustrated with respect to figure 1. In the schematic representation of figure 2, the edges 10A and 10B are drawn separated for clarity. In practice, edges 10A and 10B are mutually connected so that the body surface 10 can be smooth. The thread 12 can smoothly spiral around the body surface. The thread 12 may extend along the helical thread path 30 along at least part of the body surface 10. The screw 2 may further be provided, along the body surface 10, with the toothed ridge 20. The toothed ridge 20 may extend along the helical ridge path 32 along at least part of the body surface 10.

The thread 12 may have the thread pitch P1, defined by the helical thread path 30. The toothed ridge 12 may have the ridge pitch P2 defined by the helical ridge path 32. The ridge pitch P2 is different from the thread pitch P1. In the example of figure 2, the ridge pitch P2 is about three times larger than the thread pitch P1. More in general, the ridge pitch P2 may preferably be at least twice as large at the thread pitch P1. In a further example, the ridge pitch P2 may be at least three times larger than the thread pitch P1. In an embodiment, the ridge pitch P2 may be at most fifteen times larger than the thread pitch P1, may preferably be at most ten times larger than the thread pitch P1, and/or, more preferably, may be is at most five times larger that the thread pitch P1. Alternatively, the ridge pitch may be smaller than the thread pitch.

The thread pitch P1 may be approximately constant along a longitudinal direction 34 of the screw 2. Alternatively, the thread pitch may vary along the longitudinal direction 34. Typically, on a main body portion 6A of the body 6, the thread pitch P1 is approximately constant. Typically, along a tip body portion 6B of the body 6, the pitch P1 may vary. When comparing the thread pitch P1 and the ridge pitch P2, these pitches P1, P2 may both be evaluated at similar positions along the longitudinal direction 34. The main body portion 6A may e.g. be approximately cylindrical or frustoconical. The main part of the body portion 6A may be slightly tapered. The tip body portion 6B may be approximately conical. In a transition region 35 between the main body portion 6A and the tip body portion 6B, the body surface 10 may be rounded. Thus, a smooth transition from the tip body portion to the main body portion may be obtained.

In the examples of figures 1 and 2, the helical thread path 30, when seen along the longitudinal direction 34 of the body 6 of the screw 2, rotates in a first direction, here a right-hand direction. Additionally, the helical ridge path 32, when seen along the longitudinal direction 34 of the body of the screw, rotates in a second direction that is similar to the first direction, hence here also in a right-hand direction. However, alternatively, the helical thread path 30, when seen in along the longitudinal direction of the body of the screw, rotates in the first direction and the further helical ridge path rotates in a second, e.g. left-hand, direction that is opposite to the first direction. More in general, said longitudinal direction extends along the body of the screw in a direction away from the end portion of said body that is provided with the head. Hence, said longitudinal direction extends from the end portion that is provided with the head towards the tip body portion.

Figures 3A and 3B schematically show embodiments of a screw 2 according to the invention. The screw 2 has a body surface 10 and a thread 12. In the schematic representation of figures 3A and 3B, the edges 10A and 10B are drawn separated for clarity. In practice, edges 10A and 10B are mutually connected so that the body surface 10 can be smooth. The thread 12 can smoothly spiral around the body surface 10. The screw 2 comprises a head 4 and an elongated body 6. The elongated body 6 has an end portion 8 that is provided with the head 4. Although, as is e.g. illustrated in figure 1, the thread may have a thread width T in the longitudinal direction 34, the thread 12 is, in figures 3A and 3B (and also in figure 2), indicated schematically with a single line.

The thread 12 extends along a helical thread path along at least part of the body surface 10. The thread 12 has a plurality of windings 14. The thread defines, in between subsequent windings 14A, 14B, a channel 16 that extends along a helical channel path 18. The channel has a width W in a direction transverse to, in particular perpendicular to, said helical channel path 16.

The screw 2 is further provided, along the body surface 10, with a toothed structure that is positioned in the channel 16 for, during screwing in use of the screw 2, scraping over substantially the whole channel width W against at least part of a portion of the object wherein the screw 2 can be screwed. Said portion of the object may thus, in use, face said channel 16 when the screw 2 is screwed in the object. In the example of figure 3A, the toothed structure is formed as a toothed ridge 20 that extends from the first winding 14A to the second winding 14B. In the example of figure 3B, the toothed structure is formed as a plurality of toothed elements 20.i (i=1, ..., 3) that are mutually spaced apart between a first winding 14A and a second winding 14B. In the examples described with reference to figures 3A and 3B, the first and second windings may be subsequent to each other (as drawn) or may not be subsequent to each other. It may be clear that in both the example of figure 3A and the example of figure 3B, the toothed structure (20, 20.i) extends over the whole channel width W.

Figure 4 schematically shows an embodiment of a screw 2 according to the invention. The screw 2 may be provided with the toothed ridge 20. The toothed ridge may be provided with a ridge aperture 36. Figure 1 shows a similar ridge aperture 36. The ridge aperture may be provided with undulations and/or teeth for scraping against a material of the object. Additionally or alternatively, the thread 12 may be provided with at least one thread aperture 38, preferably with a plurality of thread apertures 38. The thread apertures 38 may, as illustrated in figure 4 by way of example, be aligned along the longitudinal direction 34 of the body 6 of the screw 2. More in general, a thread aperture preferably coincides with a ridge aperture. Thus, a thread aperture 38 may coincide with a ridge aperture 36.

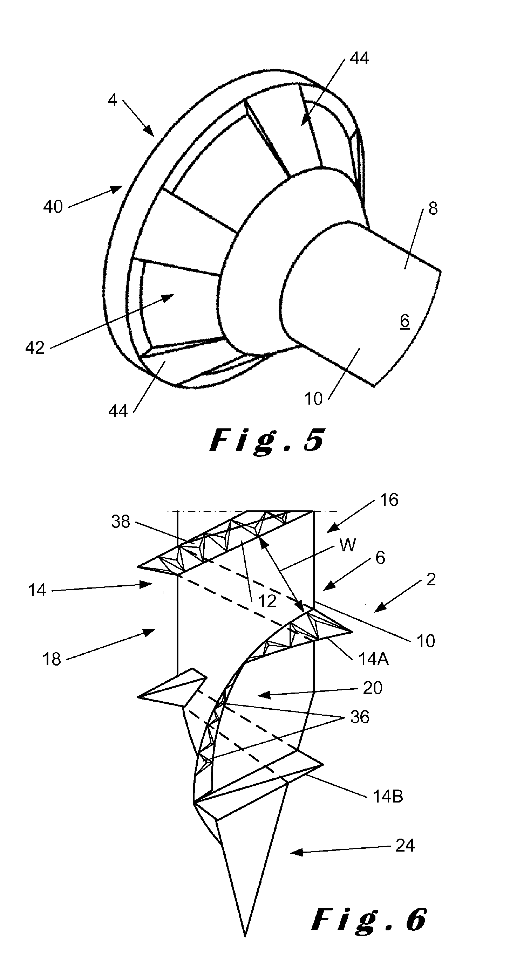

Figure 5 schematically shows a portion of the screw 2 near the head 4 of the screw 2. Figure 5 shows the end portion 8 of the body 6. The head 4 may have a first main surface 40 that is provided with an engagement structure, e.g. a notch or another cavity, for engaging thereon by means of a screwing tool, e.g. a screwdriver. The head 4 may further have a second main surface 42 that is positioned opposite to the first main surface 40. The second main surface 42 may be positioned next to the body surface 10. The second main surface is provided is provided with a plurality of nibs 44. The nibs 44 are provided such that when the screw 2 is screwed into a soft material such as for example wood, they scrape away some material such that the head 4 can sink into the material, allowing a smooth surface after the screw 2 has been screwed into the soft material.

The screw 2 described with reference to one or more of figures 1-5, or another screw, may be used in a method of screwing a screw in an object. In an embodiment, the method comprises providing a screw 2 that comprises a head 4 and an elongated body 6 having an end portion 8 that is provided with the head 6. The body 6 has a body surface 10, and the screw is provided with a thread that extends along a helical thread path along at least part of the body surface 10. The thread 12 may have a plurality of windings. The thread 12 may define, in between subsequent windings, a channel W that extends along a helical channel path and has a width in a direction transverse to said helical channel path. The screw 2 is further provided, along the body surface 10, with a toothed structure 20 that is positioned in the channel. The method comprises, during screwing, scraping, by means of the toothed structure 20, over substantially the whole channel width W against at least part of a portion of said object that faces said channel when the screw is screwed in the object.

Preferably, the method comprises removing scrapings out of the channel. Such scrapings may have formed as a result of said scraping. Conveniently, said removing may comprise screwing the screw at least partly out of the object. However, other ways of removing may also be considered, preferably removing by means of air flow, e.g. by applying underpressure or a vacuum or by blowing air along the screw 2. The presence of thread apertures 38, as illustrated with reference to figure 4, may be appreciated during the removing of scrapings. Such thread apertures may form passages through which the scrapings can pass in order to be removed.

Figure 6 schematically shows a detailed view of a preferred embodiment of a portion of a screw 2 according to the invention.

In this detailed view it can be seen that the toothed structure 20 extends at least over substantially the whole channel width W from a first winding 14A. It can be seen that the toothed structure 20 even crosses a subsequent winding 14B. However, this is not critical for the invention and the toothed structure 20 can also not cross a further second winding 14B of the thread and for example extend to substantially the end position 24 of the thread 12, although not shown in the figures. Particularly, the toothed structure 20 is formed as a toothed ridge 20 extending along a helical ridge path along part of the body surface 10 with a plurality of ridge apertures 36.

It can be seen that the toothed ridge 20 tangently extends from the first winding 14A of the thread 12. It can further be seen that the thread 12 is interrupted to accommodate the tangently extending toothed ridge 20. Although preferred as it allows an easier fabrication of the screw 2, the thread 12 could also be continuous at the location where the toothed ridge 20 extends from the first winding 14A.

## Claims

1. Screw (2) arranged to be screwed in an object, the screw (2) comprising a head (4) and an elongated body (6) having an end portion (8) that is provided with the head (4), said body (6) having a body surface (10), wherein the screw (2) is provided with a thread (12) that extends along a helical thread path along at least part of the body surface (10), said thread (12) having a plurality of windings (14), the thread (12) defining, in between subsequent windings (14), a channel (16) that extends along a helical channel path (18) and has a width (W) in a direction transverse to said helical channel path (18), wherein the screw (2) is further provided, along the body surface (10), with a toothed structure (20) that is positioned in the channel (16) for, during screwing in use of the screw (2), scraping over substantially the whole channel width (W) against at least part of a portion of said object that in use faces said channel (16) when the screw is screwed in the object.

2. Screw (2) according to claim 1, wherein the toothed structure (20) extends at least over substantially the whole channel width (W).

3. Screw (2) according to one of claims 1 - 2, wherein the thread (12) is provided with at least one thread aperture (38), preferably with a plurality of thread apertures (38).

4. Screw (2) according to claim 3 wherein the elongated body (6) extends in a longitudinal direction and the thread apertures (38) are aligned along said longitudinal direction.

5. Screw (2) according to any one of claims 1 - 4, wherein the toothed structure (20) is formed as a toothed ridge (20).

6. Screw (2) according to claim 5, wherein the toothed ridge (20) is provided with at least one ridge aperture (36), preferably with a plurality of ridge apertures (36).

7. Screw (2) according to claim 5 or 6, wherein the toothed ridge (20) extends along a helical ridge path along at least part of the body surface (10).

8. Screw (2) according to claim 7, wherein the toothed ridge (20) extends to substantially the end position (24) of the thread (12).

9. Screw (2) according to claim 7 or 8, wherein the toothed ridge (20) extends from a first winding (14A).

10. Screw (2) according to claim 9, wherein the toothed ridge (20) tangently extends from the first winding (14A) of the thread (12).

11. Screw (2) according to claims 8, 9 and 10, wherein the toothed ridge (20) extends from the first winding (14A) to the end position (24) without crossing a further second winding of the thread (12).

12. Screw (2) according to one of claims 7-11, wherein the elongated body (6) extends in a longitudinal direction, wherein the helical thread path, when seen along said longitudinal direction, rotates in a first direction, and wherein the further helical ridge path, when seen along said longitudinal direction, rotates in a second direction that is similar to the first direction.

13. Screw (2) according to one of claims 1-12, arranged to be screwed in an object substantially made of wood.

14. Assembly of a screw (2) according to one of claims 1-13 and the object.

15. Method of screwing a screw (2) in an object, the method comprising providing a screw (2) that comprises a head (4) and an elongated body (6) having an end portion (8) that is provided with the head (4), said body (6) having a body surface (10), wherein the screw (2) is provided with a thread (12) that extends along a helical thread path along at least part of the body surface (10), said thread (12) having a plurality of windings (14), the thread (12) defining, in between subsequent windings (14), a channel (16) that extends along a helical channel path (18) and has a width (W) in a direction transverse to said helical channel path (18), wherein the screw (2) is further provided, along the body surface (10), with a toothed structure (20) that is positioned in the channel (16), wherein the method comprises, during screwing, scraping, by means of the toothed structure (20), over substantially the whole channel width (W) against at least part of a portion of said object that faces said channel (16) when the screw (2) is screwed in the object.

16. Method according to claim 15, further comprising removing scrapings out of the channel that have formed as a result of said scraping.

17. Method according to one of claims 15 - 16 carried out by means of a screw according to one of claims 1-13.
